# EUROPEAN PATENT SPECIFICATION

(11) **EP 3 725 609 B1**
(45) Date of publication and mention of the grant of the patent: **01.11.2023**
(21) Application number: 18888542.0
(22) Date of filing: 10.12.2018
(51) Int. Cl.: B60T 7/18, B60T 7/12, G06N 3/04, B60W 30/095

(54) **CALIBRATING METHOD FOR VEHICLE ANTI-COLLISION PARAMETERS, VEHICLE CONTROLLER AND STORAGE MEDIUM**
VERFAHREN ZUM KALIBRIEREN VON FAHRZEUGANTIKOLLISIONSPARAMETERN, FAHRZEUGSTEUERGERÄT UND SPEICHERMEDIUM
PROCÉDÉ D'ÉTALONNAGE DE PARAMÈTRES ANTI-COLLISION DE VÉHICULE, DISPOSITIF DE COMMANDE DE VÉHICULE ET SUPPORT DE STOCKAGE

(30) Priority: 15.12.2017 CN 201711345373; 20.03.2018 CN 201810230110
(43) Date of publication of application: 21.10.2020
(73) Proprietor: NIO (Anhui) Holding Co., Ltd., Hefei City, Anhui Province (CN)
(72) Inventor: HU, Chuanyuan, Hong Kong (CN)
(74) Representative: Patentanwaltskanzlei WILHELM & BECK
(86) International application number: PCT/CN2018/120104
(87) International publication number: WO 2019/114662

(56) References cited:
- CN-A- 102 390 320
- CN-A- 102 745 194
- CN-A- 105 083 281
- CN-A- 106 585 631
- CN-A- 108 569 268
- JP-A- 2017 117 192
- US-A1- 2010 209 892
- US-A1- 2012 265 418
- US-B2- 8 942 904

## Description

### Technical Field

The invention relates to an automotive electronic technology, and in particular to a method and a controller for calibrating vehicle anti-collision parameters and a computer storage medium for implementing the method.

### Background Art

An autonomous emergency braking system (AEB) is used to avoid a rear-end collision or mitigate damage caused by same. A typical autonomous braking system generates a timing for a braking command in the following manner: according to the speed of a present vehicle and of a vehicle ahead and a distance therebetween, a time-to-collision (TTC) of the present vehicle relative to the vehicle ahead is determined, then the time-to-collision is compared with the latest time to activate braking (TTAB) of the present vehicle, and if the TTC is smaller than the TTAB, it means that the AEB system must immediately execute a braking operation to avoid a collision.

However, due to individual differences, it is not appropriate to use the same standard TTAB for all users. Therefore, a method and apparatus for automatic calibration are needed to self-adaptively determine a corresponding corrected value of TTAB for each user.

JP2017117192 discloses a drive support apparatus for preventing a driver from feeling discomfort when performing avoidance drive control for avoiding a collision with another vehicle and the like. A drive support apparatus 30 includes: target detection means 21 for detecting presence of a target such as a vehicle and obstacle surrounding a vehicle itself; collision discrimination means 22 for discriminating whether the vehicle itself in travel collides with the target; avoidance drive control means 23 for automatically performing avoidance braking or avoidance steering for avoiding a collision in a case where the vehicle itself is discriminated to collide with the target; drive learning means 24 for learning a drive mode of the vehicle itself; and avoidance timing determination means 25 for determining a start timing of the avoidance braking or avoidance steering on the basis of information of the drive mode learned by the drive learning means 24. The learning of the drive mode is carried out on the basis of driver characteristics such as longitudinal acceleration at acceleration-deceleration, deceleration start timing ahead of a stop spot, an inter-vehicular distance, and lateral acceleration at changing lanes.

### Summary of the Invention

An objective of the invention is to provide a method and apparatus for calibrating vehicle anti-collision parameters, which may self-adaptively determine corresponding corrected values of TTAB and TTAS, thereby improving driving safety and user experience.

According to one aspect of the invention, a method for calibrating an autonomous emergency braking parameter comprises the following steps:
setting a standard value of the latest time to activate braking TTAB and a standard value of the latest time to activate steering TTAS of a present vehicle;
determining a calibrated value of TTAB and a calibrated value of TTAS, wherein the calibrated value is associated with at least one of the following attributes: a vehicle kinematics attribute, a vehicle user operation attribute, an object ahead kinematics attribute, and a road ahead attribute; and
combining the standard value of TTAB and the standard value of TTAS with respective corresponding calibrated values to determine, for a current user, a corrected value of TTAB and a corrected value of TTAS.

Preferably, in the above method, the standard value of TTAB and the standard value of TTAS are determined based on driving behaviours of a group of users.

According to the invention, in the above method, the calibrated value of TTAB and the

calibrated value of TTAS are determined by utilising a deep learning method.

According to the invention, in the above method, a model of the deep learning method comprises:
an input layer, wherein the input layer comprises a plurality of input nodes, and each of the input nodes is associated with at least one of the following attributes: a vehicle kinematics attribute, a vehicle user operation attribute, an object ahead kinematics attribute, and a road ahead attribute;
a hidden layer; and
an output layer, wherein the output layer comprises an output node about the calibrated value of TTAB and an output node about the calibrated value of TTAS.

Preferably, in the above method, the input nodes are associated with the vehicle kinematics attribute, the vehicle kinematics attribute is a degree of coincidence between travelling paths of the present vehicle and a vehicle ahead, and a vehicle longitudinal and transverse motions classifier is utilised to map a degree of coincidence associated with the current user to a corresponding category.

Preferably, in the above method, the input nodes are associated with the vehicle user operation attribute, the vehicle user operation attribute is a driving operation style, and a driving operation style classifier is utilised to map a driving operation style associated with the current user to a corresponding category.

Preferably, in the above method, based on historical and current position information of an accelerator pedal, a brake pedal and a steering wheel, categories of driving operation styles are classified.

Preferably, in the above method, the input nodes are associated with the object ahead kinematics attribute, the object ahead kinematics attribute is the position, speed and acceleration of an object ahead relative to the present vehicle, and an object ahead longitudinal and transverse motions classifier is utilised to map an object ahead kinematics attribute associated with the current user to a corresponding category.

Preferably, in the above method, the input nodes are associated with the road ahead attribute, the road ahead attribute is a timing for prompting, based on road information, a driver to take a pre-action, and a road ahead information classifier is utilised to map a road ahead attribute associated with the current user to a corresponding category.

Preferably, in the above method, the number of layers of the hidden layer ranges from 4 to 100.

According to another aspect of the invention, a vehicle controller comprises a memory, a processor, and a computer program which is stored on the memory and operable on the processor, wherein the program is executed to implement the above method.

According to still another aspect of the invention, a computer-readable storage medium is provided, on which a computer program is stored, and the program implements, when executed by a processor, the above method.

According to the invention, since the corresponding corrected value of TTAB and the corresponding corrected value of TTAS may be self-adaptively determined, driving safety and user experience are improved.

### Brief Description of the Drawings

The above-mentioned and/or other aspects and advantages of the invention will become clearer and more comprehensible from the following description of various aspects with reference to the accompanying drawings, and the same or similar units in the accompanying drawings are denoted by the same reference numerals. The accompanying drawings comprise:
Fig. 1 is a schematic diagram of a model of a deep learning method according to an embodiment of the invention.
Fig. 2 is a flowchart of a method for calibrating an autonomous emergency braking parameter according to another embodiment of the invention.
Fig. 3 is a schematic block diagram of a vehicle controller according to still another embodiment of the invention.
Fig. 4 is a schematic block diagram of an apparatus for calibrating an autonomous emergency braking parameter according to an example not covered by the invention.

### Detailed Description of Embodiments

The invention is described below more comprehensively with reference to the accompanying drawings showing schematic embodiments of the invention. However, the invention may be implemented in different forms but should not be construed as being only limited to the embodiments herein. The embodiments provided above are intended to make the disclosure of this specification comprehensive and complete, so as to more comprehensively convey the scope of protection of the invention to a person skilled in the art.

In this specification, the terms such as "include" and "comprise" indicate that in addition to the units and steps that are directly and clearly described in the specification and claims, other units and steps that are not directly or clearly described are not excluded in the technical solutions of the invention.

The terms such as "first" and "second" are not used to indicate sequences of units in terms of time, space, size, and the like, and are only used to distinguish various units.

"Coupled" should be construed as comprising a case in which electrical energy or an electrical signal is directly transferred between two units or a case in which the electrical energy or the electrical signal is indirectly transferred via one or more third units.

According to an aspect of the invention, the latest time to activate braking (TTAB) and the latest time to activate steering (TTAS) of a present vehicle are self-adaptively corrected for a driving behaviour of a user. To this end, by combining a standard value of TTAB and a standard value of TTAS with respective corresponding calibrated values (for example adding the standard value and calibrated value, or adding same after certain weights are separately given to the standard value and the calibrated value), a corrected value of TTAB and a corrected value of TTAS for a current user are determined.

The calibrated value of TTAB and the calibrated value of TTAS are determined by utilising a deep learning method.

The inventor of the invention, after in-depth study, proposes a model of the deep learning method suitable for determining the calibrated value of TTAB and the calibrated value of TTAS. Further description is made below.

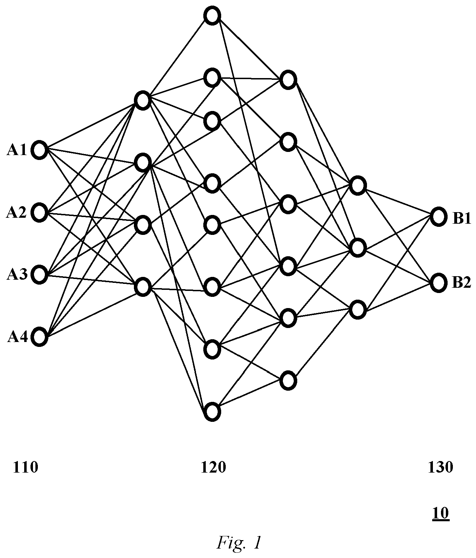

Fig. 1 is a schematic diagram of a model of a deep learning method according to an embodiment of the invention. As shown in Fig. 1, an input layer 110 of the model 10 comprises a plurality of input nodes A1 to A4, and each of the input nodes A1 to A4 is associated with at least one of the following attributes: a vehicle kinematics attribute, a vehicle user operation attribute, an object ahead kinematics attribute, and a road ahead attribute.

It should be noted that there are many variables associated with the driving behaviour of the user. These variables, for example, comprise but are not limited to: a longitudinal motion speed of a present vehicle, a transverse motion speed of the present vehicle, a longitudinal acceleration of the present vehicle, a transverse acceleration of the present vehicle, an angular yaw velocity of the present vehicle, an accelerator pedal opening percentage of the present vehicle, a brake pedal opening percentage of the present vehicle, a steering wheel position of the present vehicle, a longitudinal distance of a moving object ahead relative to the present vehicle, a transverse distance of the moving object ahead relative to the present vehicle, a longitudinal motion speed of the moving object ahead, a transverse motion speed of the moving object ahead, a longitudinal acceleration of the moving object ahead, a transverse acceleration of the moving object ahead, a longitudinal distance of a stationary object ahead relative to the present vehicle, a transverse distance of the stationary object ahead relative to the present vehicle, gradient information of a road ahead, curvature information of the road ahead, speed limit information of the road ahead, and the like. If these variables are all used as nodes of the input layer, a model structure and model training will become complicated.

For this problem, the inventor of the invention creatively aggregates various variables into the vehicle kinematics attribute, the vehicle user operation attribute, the object ahead kinematics attribute and the road ahead attribute, serving as input variables of the deep learning model. Specifically, each attribute may be determined based on specific subsets of the above variables.

For example, a current travelling path of the present vehicle may be calculated based on the longitudinal motion speed of the present vehicle, the transverse motion speed of the present vehicle, the longitudinal acceleration of the present vehicle, the transverse acceleration of the present vehicle, and the angular yaw velocity of the present vehicle, and in combination with historical travelling paths of the present vehicle, subsequent travelling behaviours of the present vehicle are predicted to be used as a kind of the vehicle kinematics attributes. In addition, based on the current travelling path of the present vehicle and in combination with a travelling path of a vehicle ahead (which is calculated based on a transverse motion speed of the vehicle ahead, a longitudinal acceleration of the vehicle ahead, a transverse acceleration of the vehicle ahead, and an angular yaw velocity of the vehicle ahead), a degree of coincidence between the travelling path of the present vehicle and the travelling path of the vehicle ahead is further acquired, and the degree of coincidence may be used as another kind of the vehicle kinematics attributes. Preferably, a vehicle longitudinal and transverse motions classifier may be utilised to map a degree of coincidence associated with a current user to a corresponding category. The degree of coincidence, for example, comprises three categories: low, medium and high.

The vehicle user operation attribute may be represented by using a driving operation style associated with historical and current position information of an accelerator pedal, a brake pedal and a steering wheel. Preferably, a driving operation style classifier may be utilised to map a driving operation style associated with the current user to a corresponding category. The driving operation style, for example, comprises five categories: very mild, relatively mild, moderate, relatively aggressive and very aggressive.

The object ahead kinematics attribute may be represented by using the position and the speed of an object ahead relative to the present vehicle (such as the longitudinal distance of the moving object ahead relative to the present vehicle, the transverse distance of the moving object ahead relative to the present vehicle, the longitudinal motion speed of the moving object ahead, the transverse motion speed of the moving object ahead, the longitudinal acceleration of the moving object ahead, the transverse acceleration of the moving object ahead, the longitudinal distance of the stationary object ahead relative to the present vehicle, and the transverse distance of the stationary object ahead relative to the present vehicle). Preferably, an object ahead longitudinal and transverse motions classifier may be utilised to map an object ahead kinematics attribute associated with the current user to a corresponding category. The object ahead kinematics attribute, for example, comprises three categories: slow, constant and fast.

The road ahead attribute may be represented by using a timing for prompting, based on road information (such as the gradient information of the road ahead, the curvature information of the road ahead, and the speed limit information of the road ahead), a driver to take a pre-action. Preferably, a road ahead information classifier is utilised to map a road ahead attribute associated with the current user to a corresponding category. The timing for taking the pre-action, for example, comprises three categories: early, medium and late.

A hidden layer 120 in the model shown in Fig. 1 is of a multilayered structure, and the number of layers of the hidden layer, for example, may be from 4 to 100.

In the embodiment as shown in Fig. 1, an output layer 130 comprises an output node B 1 about the calibrated value of TTAB and an output node B2 about the calibrated value of TTAS.

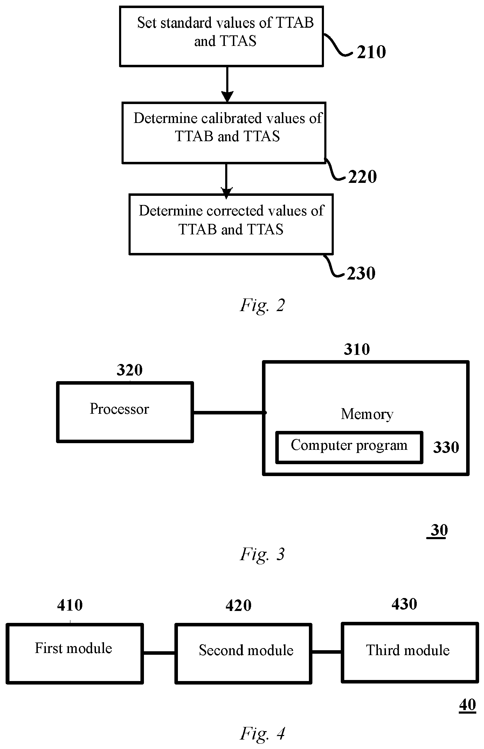

Fig. 2 is a flowchart of a method for calibrating an autonomous emergency braking parameter according to another embodiment of the invention.

As shown in Fig. 2, in step 210, a vehicle controller sets a standard value of the latest time to activate braking (TTAB) and a standard value of the latest time to activate steering (TTAS) of a present vehicle. In this embodiment, the standard value of TTAB and the standard value of TTAS may be determined based on driving behaviours of a group of users, for example, a statistical value based on a large number of users may be used as the standard value of TTAB and the standard value of TTAS.

Next, step 220, in which the vehicle controller determines a calibrated value of TTAB and a calibrated value of TTAS, is entered. For example, the vehicle controller may utilise the above model, shown with the aid of Fig. 1, of the deep learning method to make determination.

Next, step 230, in which the vehicle controller determines, by combining the standard value of TTAB and the standard value of TTAS with respective corresponding calibrated values (for example adding the standard value and calibrated value, or adding same after certain weights are separately given to the standard value and calibrated value), a corrected value of TTAB and a corrected value of TTAS for a current user, is entered.

Fig. 3 is a schematic block diagram of a vehicle controller according to still another embodiment of the invention.

The vehicle controller 30 as shown in Fig. 3 comprises a memory 310, a processor 320 and a computer program 330 which is stored on the memory 310 and operable on the processor 320, wherein the above method for calibrating an autonomous emergency braking parameter shown in virtue of Figs. 1 and 2 may be implemented by executing the computer program 330.

Fig. 4 is a schematic block diagram of an apparatus for calibrating an autonomous emergency braking parameter according to an example not covered by the invention.

The apparatus 40, as shown in Fig. 4, comprises a first module 410, a second module 420 and a third module 430.

The first module 410 is configured to set a standard value of the latest time to activate braking TTAB and a standard value of the latest time to activate steering TTAS of a present vehicle. The second module 420 is configured to determine a calibrated value of TTAB and a calibrated value of TTAS, wherein the calibrated value is associated with at least one of the following attributes: a vehicle kinematics attribute, a vehicle user operation attribute, an object ahead kinematics attribute, and a road ahead attribute. The third module 430 is configured to combine the standard value of TTAB and the standard value of TTAS with respective corresponding calibrated values to determine, for a current user, a corrected value of TTAB and a corrected value of TTAS.

According to another aspect of the invention, a computer-readable storage medium is further provided, on which a computer program is stored, and the program may implement, when executed by a processor, the above method for calibrating the autonomous emergency braking parameter shown in virtue of Figs. 1 and 2.

The embodiments and examples proposed herein are provided to describe as adequately as possible embodiments according to the technology and specific applications thereof and enable a person skilled in the art to implement and use the invention. However, a person skilled in the art will know that the foregoing descriptions and examples are provided only for description and illustration. The proposed description is not intended to cover all aspects of the invention or limit the invention to the disclosed precise forms.
In view of the above, the scope of the invention is defined only by the appended claims.

## Claims

1. A method for calibrating vehicle anti-collision parameters, **characterized by** comprising the following steps:
setting (210) a standard value of the latest time to activate braking TTAB and a standard value of the latest time to activate steering TTAS of a present vehicle;
determining (220) a calibrated value of TTAB and a calibrated value of TTAS, wherein the calibrated value is associated with at least one of the following attributes: a vehicle kinematics attribute, a vehicle user operation attribute, an object ahead kinematics attribute, and a road ahead attribute; and
combining (230) the standard value of TTAB and the standard value of TTAS with respective corresponding calibrated values to determine, for a current user, a corrected value of TTAB and a corrected value of TTAS,
**characterized in that**, the calibrated value of TTAB and the calibrated value of TTAS are determined by utilising a deep learning method,
a model (10) of the deep learning method comprises:
an input layer (110), wherein the input layer comprises a plurality of input nodes (A1, A2, A3, A4), and each of the input nodes is associated with at least one of the following attributes: a vehicle kinematics attribute, a vehicle user operation attribute, an object ahead kinematics attribute, and a road ahead attribute;
a hidden layer (120), and
an output layer (130),
wherein the output layer comprises an output node (B1) about the calibrated value of TTAB and an output node (B2) about the calibrated value of TTAS.

2. The method of claim 1, **characterized in that**, the standard value of TTAB and the standard value of TTAS are determined based on driving behaviours of a group of users.

3. The method of claim 1, **characterized in that**, the input node (A1, A2, A3, A4) are
associated with the vehicle kinematics attribute, the vehicle kinematics attribute is a degree of coincidence between travelling paths of the present vehicle and a vehicle ahead, and a vehicle longitudinal and transverse motions classifier is utilised to map a degree of coincidence associated with the current user to a corresponding category.

4. The method of claim 1, **characterized in that**, the input nodes (A1, A2, A3, A4) are
associated with the vehicle user operation attribute, the vehicle user operation attribute is a driving operation style, and a driving operation style classifier is utilised to map a driving operation style associated with the current user to a corresponding category.

5. The method of claim 4, **characterized in that**, based on historical and current position information of an accelerator pedal, a brake pedal and a steering wheel, categories of driving operation styles are classified.

6. The method of claim 1, **characterized in that**, the input nodes (A1, A2, A3, A4) are
associated with the object ahead kinematics attribute, the object ahead kinematics attribute is the position, speed and acceleration of an object ahead relative to the present vehicle, and an object ahead longitudinal and transverse motions classifier is utilised to map an object ahead kinematics attribute associated with the current user to a corresponding category.

7. The method of claim 1, **characterized in that**, the input nodes (A1, A2, A3, A4) are
associated with the road ahead attribute, the road ahead attribute is a timing for prompting, based on road information, a driver to take a pre-action, and a road ahead information classifier is utilised to map a road ahead attribute associated with the current user to a corresponding category.

8. The method of claim 1, **characterized in that**, the number of layers of the hidden layer (120) ranges from 4 to 100.

9. A vehicle controller (30), comprising a memory (310), a processor (320), and a computer program (330) which is stored on the memory and operable on the processor, **characterized in that**, the program is executed to implement a method of any one of claims 1-8.

10. A computer-readable storage medium, on which a computer program is stored, **characterized in that**, the program implements, when executed by a processor, a method of any one of claims 1-8.

## Patentansprüche

1. Verfahren zum Kalibrieren von Fahrzeugantikollisionsparametern, **dadurch gekennzeichnet, dass** es die folgenden Schritte umfasst:
Setzen (210) eines Standardwerts der spätesten Bremsbetätigungszeit (Time To Activate Braking) TTAB und eines Standardwerts der spätesten Lenkbetätigungszeit (Time To Activate Steering) TTAS eines vorliegenden Fahrzeugs;
Bestimmen (220) eines kalibrierten Werts der TTAB und eines kalibrierten Werts der TTAS, wobei der kalibrierte Wert mit mindestens einem der folgenden Attribute assoziiert ist: einem Fahrzeugkinematikattribut, einem Fahrzeugbenutzerbetriebsattribut, einem Attribut der Kinematik eines davor befindlichen Objekts und einem Attribut einer vorausliegenden Straße; und
Kombinieren (230) des Standardwerts der TTAB und des Standardwerts der TTAS mit jeweiligen entsprechenden kalibrierten Werten, um für einen aktuellen Benutzer einen korrigierten Wert der TTAB und einen korrigierten Wert der TTAS zu bestimmen,
**dadurch gekennzeichnet, dass** der kalibrierte Wert der TTAB und der kalibrierte Wert der TTAS unter Nutzung eines Deep-Learning-Verfahrens bestimmt werden,
ein Modell (10) des Deep-Learning-Verfahrens Folgendes umfasst:
eine Eingangsschicht (110), wobei die Eingangsschicht eine Vielzahl von Eingangsknoten (A1, A2, A3, A4) umfasst und jeder der Eingangsknoten mit mindestens einem der folgenden Attribute assoziiert ist: einem Fahrzeugkinematikattribut, einem Fahrzeugbenutzerbetriebsattribut, einem Attribut der Kinematik eines davor befindlichen Objekts und
einem Attribut einer vorausliegenden Straße;
eine verborgene Schicht (120) und
eine Ausgangsschicht (130), wobei die Ausgangsschicht einen Ausgangsknoten (B1) über den kalibrierten Wert der TTAB und einen Ausgangsknoten (B2) über den kalibrierten Wert der TTAS umfasst.

2. Verfahren nach Anspruch 1, **dadurch gekennzeichnet, dass** der Standardwert der TTAB und der Standardwert der TTAS basierend auf Fahrverhalten einer Gruppe von Benutzern bestimmt werden.

3. Verfahren nach Anspruch 1, **dadurch gekennzeichnet, dass** die Eingangsknoten (A1, A2, A3, A4) mit dem Fahrzeugkinematikattribut assoziiert sind, das Fahrzeugkinematikattribut ein Grad des Zusammenfallens von Fahrwegen des vorliegenden Fahrzeugs und eines vorausfahrenden Fahrzeugs ist und ein Klassifikator der Fahrzeuglängs- und -querbewegungen genutzt wird, um einen Grad des Zusammenfallens, der mit dem aktuellen Benutzer assoziiert ist, einer entsprechenden Kategorie zuzuordnen.

4. Verfahren nach Anspruch 1, **dadurch gekennzeichnet, dass** die Eingangsknoten (A1, A2, A3, A4) mit dem Fahrzeugbenutzerbetriebsattribut assoziiert sind, das Fahrzeugbenutzerbetriebsattribut ein Fahrbetriebsstil ist und ein Fahrbetriebsstilklassifikator genutzt wird, um einen Fahrbetriebsstil, der mit dem aktuellen Benutzer assoziiert ist, einer entsprechenden Kategorie zuzuordnen.

5. Verfahren nach Anspruch 4, **dadurch gekennzeichnet, dass** Kategorien von Fahrbetriebsstilen basierend auf bisherigen und aktuellen Positionsinformationen eines Gaspedals, eines Bremspedals und eines Lenkrads klassifiziert werden.

6. Verfahren nach Anspruch 1, **dadurch gekennzeichnet, dass** die Eingangsknoten (A1, A2, A3, A4) mit dem Attribut der Kinematik eines davor befindlichen Objekts assoziiert sind, das Attribut der Kinematik eines davor befindlichen Objekts die Position, die Geschwindigkeit und die Beschleunigung eines davor befindlichen Objekts relativ zu dem vorliegenden Fahrzeug ist und ein Klassifikator der Längs- und Querbewegungen eines davor befindlichen Objekts genutzt wird, um ein Attribut der Kinematik eines davor befindlichen Objekts, das mit dem aktuellen Benutzer assoziiert ist, einer entsprechenden Kategorie zuzuordnen.

7. Verfahren nach Anspruch 1, **dadurch gekennzeichnet, dass** die Eingangsknoten (A1, A2, A3, A4) mit dem Attribut einer vorausliegenden Straße assoziiert sind, das Attribut einer vorausliegenden Straße eine Zeitvorgabe zum auf Straßeninformationen basierenden Auffordern eines Fahrers zum Ausführen einer vorausgehenden Aktion ist und ein Klassifikator von Informationen zu einer vorausliegenden Straße genutzt wird, um ein Attribut einer vorausliegenden Straße, das mit dem aktuellen Benutzer assoziiert ist, einer entsprechenden Kategorie zuzuordnen.

8. Verfahren nach Anspruch 1, **dadurch gekennzeichnet, dass** die Anzahl von Schichten der verborgenen Schicht (120) 4 bis 100 beträgt.

9. Fahrzeugsteuergerät (30), das einen Speicher (310), einen Prozessor (320) und ein Computerprogramm (330), das in dem Speicher abgelegt und in dem Prozessor ablauffähig ist, umfasst,
**dadurch gekennzeichnet, dass** das Programm ausgeführt wird, um ein Verfahren nach einem der Ansprüche 1-8 zu implementieren.

10. Computerlesbares Speichermedium, in dem ein Computerprogramm abgelegt ist, **dadurch gekennzeichnet, dass** das Programm, wenn es durch einen Prozessor ausgeführt wird, ein Verfahren nach einem der Ansprüche 1-8 implementiert.

## Revendications

1. Procédé de calibrage des paramètres anticollision d'un véhicule, **caractérisé en ce qu'**il comprend les étapes suivantes :
le réglage (210) d'une valeur standard du dernier moment d'activation du freinage TTAB et d'une valeur standard du dernier moment d'activation de la direction TTAS d'un présent véhicule ;
la détermination (220) d'une valeur calibrée d'un TTAB et d'une valeur calibrée d'un TTAS, la valeur calibrée étant associée à au moins un des attributs suivants : un attribut cinématique de véhicule, un attribut d'opération d'utilisateur du véhicule, un attribut cinématique d'objet à l'avant et un attribut de route à l'avant ; et
la combinaison (230) de la valeur standard du TTAB et de la valeur standard du TTAS avec des valeurs calibrées correspondantes respectives pour déterminer, pour un utilisateur actuel, une valeur corrigée du TTAB et une valeur corrigée du TTAS,
**caractérisé en ce que** la valeur calibrée du TTAB et la valeur calibrée du TTAS sont déterminées en utilisant un procédé d'apprentissage profond,
un modèle (10) du procédé d'apprentissage profond comprend :
une couche d'entrée (110), la couche d'entrée comprenant une pluralité de noeuds d'entrée (A1, A2, A3, A4), et chacun des noeuds d'entrée étant associé à au moins un des attributs suivants : un attribut cinématique de véhicule, un attribut d'opération d'utilisateur de véhicule, un attribut cinématique d'objet à l'avant et un attribut de route à l'avant ;
une couche cachée (120), et
une couche de sortie (130), la couche de sortie comprenant un noeud de sortie (B1) concernant la valeur calibrée du TTAB et un noeud de sortie (B2) concernant la valeur calibrée du TTAS.

2. Procédé selon la revendication 1, **caractérisé en ce que** la valeur standard du TTAB et la valeur standard du TTAS sont déterminées sur la base de comportements de conduite d'un groupe d'utilisateurs.

3. Procédé selon la revendication 1, **caractérisé en ce que** les noeuds d'entrée (A1, A2, A3, A4) sont associés à l'attribut cinématique de véhicule, l'attribut cinématique de véhicule est un degré de coïncidence entre des voies de déplacement du présent véhicule et un véhicule à l'avant, et un classificateur de mouvements longitudinaux et transversaux du véhicule est utilisé pour mettre en correspondance un degré de coïncidence associé à l'utilisateur actuel avec une catégorie correspondante.

4. Procédé selon la revendication 1, **caractérisé en ce que** les noeuds d'entrée (A1, A2, A3, A4) sont associés à l'attribut d'opération d'utilisateur du véhicule, l'attribut d'opération d'utilisateur du véhicule est un style d'opération de conduite, et un classificateur de style d'opération de conduite est utilisé pour mettre en correspondance un style d'opération de conduite associé à l'utilisateur actuel avec une catégorie correspondante.

5. Procédé selon la revendication 4, **caractérisé en ce que**, sur la base d'informations de position actuelle et historique d'une pédale d'accélérateur, d'une pédale de frein et d'un volant de direction, des catégories de styles d'opérations de conduite sont classifiées.

6. Procédé selon la revendication 1, **caractérisé en ce que** les noeuds d'entrée (A1, A2, A3, A4) sont associés à l'attribut cinématique d'objet à l'avant, l'attribut cinématique d'objet à l'avant est la position, la vitesse et l'accélération d'un objet à l'avant par rapport au présent véhicule, et un classificateur de mouvements longitudinaux et transversaux d'objet à l'avant est utilisé pour mettre en correspondance un attribut cinématique d'objet à l'avant associé à l'utilisateur actuel avec une catégorie correspondante.

7. Procédé selon la revendication 1, **caractérisé en ce que** les noeuds d'entrée (A1, A2, A3, A4) sont associés à l'attribut de route à l'avant, l'attribut de route à l'avant est une temporisation d'invite, sur la base des informations de route, d'un conducteur pour prendre une action préalable, et un classificateur d'informations de route à l'avant est utilisé pour mettre en correspondance un attribut de route à l'avant associé à l'utilisateur actuel avec une catégorie correspondante.

8. Procédé selon la revendication 1, **caractérisé en ce que** le nombre de couches de la couche cachée (120) se situe dans la plage allant de 4 à 100.

9. Contrôleur de véhicule (30), comprenant une mémoire (310), un processeur (320) et un programme informatique (330) qui est stocké sur la mémoire et utilisable sur le processeur, **caractérisé en ce que** le programme est exécuté pour mettre en œuvre un procédé selon l'une quelconque des revendications 1 à 8.

10. Support de stockage lisible par ordinateur sur lequel est stocké un programme informatique, **caractérisé en ce que** le programme met en oeuvre, lorsqu'il est exécuté par un processeur, un procédé selon l'une quelconque des revendications 1 à 8.
